# EUROPEAN PATENT APPLICATION

(11) **EP 3 392 777 A1**
(43) Date of publication of application: **24.10.2018**
(21) Application number: 18166721.3
(22) Date of filing: 11.04.2018
(51) Int. Cl.: G06F 13/16, G06F 13/40, G06F 13/42

(54) **PLUGGABLE NON-VOLATIVE MEMORY DRIVES**

(30) Priority: 19.04.2017 US 201715490979
(71) Applicant: Hewlett Packard Enterprise Development L.P., Houston, TX 77070 (US)
(72) Inventor: Norton, John, HOUSTON, TX Texas TX 77070 (US)
(74) Representative: ZBM Patents - Zea, Barlocci & Markvardsen

(57) **Abstract**

Examples relate to a pluggable non-volatile memory (NVM) drive comprising a printed circuit assembly (PCA) that in turn comprises a connector, at least one NVM chip and a memory semantic fabric media controller connected to the at least one NVM chip. In some examples, the memory semantic fabric media controller is to provide a memory semantic interface between the at least one NVM chip and a computing network device to which the pluggable NVM drive is plugged.

## Description

### BACKGROUND

Computing network devices, for example routers, switches, servers, etc., may comprise a plurality of pluggable networking devices, such as transceivers, plugged into their networking ports. These networking ports are used for connecting to a network of computing devices, and may be for example Quad Small Form-factor Pluggable (QSFP) ports or Octal Small Form-Factor Pluggable (OSFP) ports. In turn, the computing network devices may comprise a housing to allocate processing resources, internal memories, internal storages, input/output (I/O) devices, cooling systems, etc. Additionally, the computing network device may comprise ports connected to the elements within the housing to which the pluggable networking drives may be plugged to provide networking services to the computing network device.

### BRIEF DESCRIPTION OF THE DRAWINGS

FIG. 1 is an example of a pluggable Non-Volatile Memory (NVM) drive.
FIG. 2 is a perspective view of a plurality of example pluggable NVM drives allocated in housings and inserted into networking ports of a computing network device, including an exploded view of one of the example pluggable NVM drives with its respective housing.
FIG. 3 is a perspective view of a set of pluggable NVM drives housed in protocol connectors of a board of a computing network device.
FIG. 4 is a flowchart of an example method for obtaining a pluggable NVM drive.

### DETAILED DESCRIPTION

The memory of a computing network device, such a router, switch, server, etc., may be defined as the capacity of the internal memories and the capacity of the external memories plugged into the ports of the computing network device. The bandwidth of a computing network device may be in turn defined as the sum of the bandwidths of all the network connections of the computing network device and may determine the amount of data that the computing network device may be uploading and downloading from/to the network at the same time. As used herein, the term "memory oversubscription ratio" may define the ratio between the memory of a computing network device and the bandwidth of the cited computing network device.

In particular, the memory oversubscription ratio of the computing network devices in a network, and thus of the entire network, may be generally determined prior to operation of the network. Modifying said memory oversubscription ratio of the network, for example by deploying additional memory into a particular computing network device, may result in the modification or replacement of the board of the computing network device. Besides, modifying the oversubscription ratio of a particular computing network device during operation of the network may even result in the network computing device being taken offline. Therefore, the modification of the memory oversubscription ratio of a particular computing network device during operation of the network may severally affect the performance of the network and, if the board is replaced or modified, may further increase the network deployment costs.

To address these issues, examples disclosed herein describe a pluggable non-volatile memory (NVM) drive comprising a printed circuit assembly (PCA) that in turn comprises a connector, at least one NVM chip attached to the PCA and a memory semantic fabric media controller connected to the at least one NVM chip. The connector, the at least one NVM chip and the memory semantic fabric media controller may be attached to a printed circuit board (PCB) forming the PCA. In such examples, the memory semantic fabric media controller is to provide a memory semantic interface between the at least one NVM chip and a computing network device to which the pluggable NVM drive is plugged. The memory semantic fabric media controller may be a digital circuit that manages the flow of data going to and from the at least one NVM chip. The pluggable NVM drive allows to dynamically configure the topology of an entire network by modifying the memory oversubscription ratio of a particular computing network device, and thus of the entire network, by plugging additional memories in said particular computing network device that automatically becomes addressable by all computing network devices of the network. Therefore, examples disclosed herein may provide low cost and scalable storage and memory modules which are pluggable and that can be populated internally to the computing network devices or may be front accessible.

In some examples, the memory semantic fabric media controller may be a Gen-Z media controller. As used herein, "Gen-Z" refers to an interconnection protocol designed to provide memory semantic access to data and devices via direct-attached, switched, or fabric topologies. Gen-Z protocol abstracts memory media to enable any type and mix of DRAM and NVM to be directly accessed by applications or through block-semantic communications.

In some examples, the pluggable NMV drive may be disposed within a housing that supports the PCA. In some other examples, the housing may be a fiber optic transceiver housing such as a Networking Multi-Source Agreement (MSA) housing. Examples of Networking MSA housings may be Quad Small Form-Factor Pluggable (QSFP) housings, Small Form-Factor Pluggable (SFP) housings, a 10 Gigabit Small Form-Factor Pluggable (XFP) housings, etc. In some examples, the housing may be plugged into a networking port of the computing network device, for example an external networking port, such that the pluggable NVM drive is externally accessible. The housing may allow the connection of the pluggable NVM drives into pre-existing ports, slots, or connectors of the computing network devices. For examples, a QSFP housing may allow a pluggable NVM drive to be connected in a QSFP port of a switch. In such example, the topology of the switch may be modified on demand by replacing QSFP transceivers, having networking purposes, pluggable NVM drives with memory or storage purposes.

In some other examples, the pluggable NVM drive may be plugged into an internal protocol connector of the computing network device. Some examples of protocol connectors may be QSFP protocol connectors, XFP protocol connectors, SFP protocol connectors, etc. This may provide a higher density of pluggable NVM drives within a space and lower infrastructure costs since the housings are avoided. Besides, it may allow a better cooling of the PCAs since cooling is more directly received by components of the pluggable NVM drive. This may allow the same PCA to be leveraged in different applications, lowering overall development costs. In addition, the topology of the computing network device may be modified by plugging pluggable NVM drives in empty protocol connectors in the board of the computing network device or by replacing networking devices already plugged in protocol connectors with pluggable NVM drives.

In some examples, the connector of the pluggable NVM drive may be selected from a group comprising MSA connectors, QSFP connectors and combinations thereof. In some other examples, the connector may be non-MSA connectors configured to accept that same PCA card edge.

In the following description, for purposes of explanation, numerous specific details are set forth in order to provide a thorough understanding of the present systems and methods. It will be apparent, however, to one skilled in the art that the present apparatus, systems, and methods may be practiced without these specific details. Reference in the specification to "an example" or similar language means that a particular feature, structure, or characteristic described in connection with that example is included as described, but may not be included in other examples.

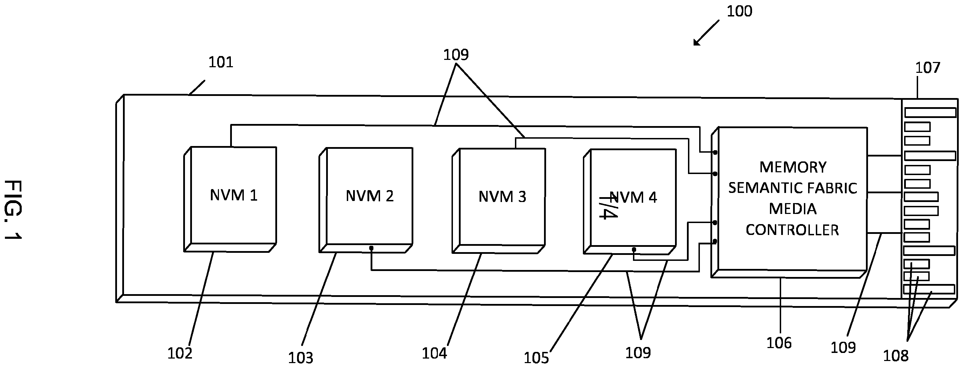

Turning now to the figures, FIG. 1 shows an example pluggable NVM drive 100. It should be understood that the pluggable NVM drive 100 depicted in FIG. 1 may include additional components and that some of the components described herein may be removed and/or modified without departing from a scope of the pluggable NVM drive 100.

The pluggable NVM drive 100 comprises a PCA 101 that in turn comprises a connector 107, four NVM chips 102-105 and a memory semantic fabric media controller 106 attached on a printed circuit board (PCB). The pluggable NVM drive 100 may be a hot-pluggable NVM drive which can be hot inserted or hot removed into or from a from a connector of the computing network device. A hot-pluggable NVM drive is a storage drive that can be inserted and removed from a connector, such as a port or a connector protocol, of a computing network device, such a switch or server, while the switch or server remains powered and functioning. While FIG. 1 depicts four NVM chips 102-105 attached to the PCA 101, any number of NVM chips 102-105 may be attached to the PCA 101 depending on desired memory or storage capabilities.

As shown in FIG. 1, the connector 107 comprises electrical contact pads 108 such as gold plated terminals formed on the PCB. The PCA 101 further comprises circuitry 109 to electrically connect the NVM chips 102-105 to the memory semantic fabric media controller 106 and the memory semantic fabric media controller 106 to the connector 107. The memory semantic fabric media controller 106 is to provide a memory semantic interface, also named as memory semantic interconnect, between the NVM chips 102-105 and a computing network device to which the pluggable NVM drive 100 is plugged. The memory semantic interface is to handle memory operations and communications such as load/store, put/get and atomics. In some examples, the NVM chips 102-105 may comprise flash memories, memristors, Non-Volatile RAMs (NVRAM), Read-Only-Memories (ROM), Magneto-Resistive RAMs (MRAM), Ferroelectric RAMs (F-RAM), Resistive RAMs (ReRAM), Managed DRAMs and any combination thereof.

The example pluggable NVM drive 100 in FIG. 1, having a memory semantic fabric media controller 106, is storage class memory that enables the combination of storage and memory creating a new form factor for storage and memory that is low cost, scalable, pluggable and front/externally accessible. In some examples, the pluggable NVM drive 100 may be hot-pluggable. In some other examples, the memory semantic fabric media controller 106 may be a Gen-Z media controller.

As used herein, the "memory semantic fabric media controller" may be any combination of hardware and programming to implement the functionalities of the controller described herein. In examples described herein, such combinations of hardware and programming may be implemented in a number of different ways. For example, the programming for controller may be processor executable instructions stored on at least one non-transitory machine-readable storage medium and the hardware for controller may include at least one processor to execute those instructions. In some examples, the at least one machine-readable storage medium may store instructions that, when executed by the at least one processing resource, at least partially implement the controller. In some examples, the functionalities of controller may be at least partially implemented in the form of electronic circuitry.

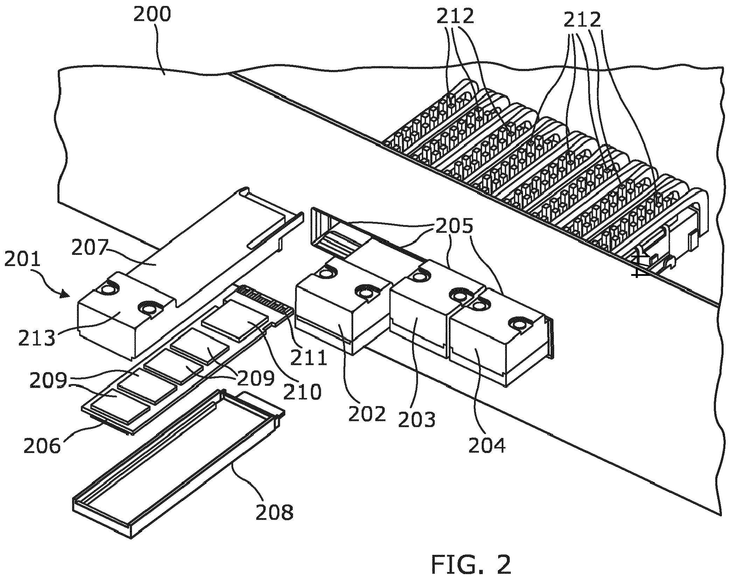

FIG. 2 is a perspective view of a plurality of example pluggable NVM drives 201-204 allocated in housings and inserted into networking ports 205 of a computing network device 200, including an exploded view of one of the example pluggable NVM drives 201 with its respective housing 207,208. It should be understood that the plurality of pluggable NVM drives 201-204 allocated in housings and inserted into networking ports 205 of a computing network device 200 depicted in FIG. 2 may include additional components and that some of the components described herein may be removed and/or modified without departing from a scope of the plurality of example pluggable NVM drives 201-204 allocated in housings and inserted into networking ports 205 of a computing network device 200.

As shown in FIG. 2, the computing network device 200, for example a switch, has four networking ports 205 in which respective pluggable NVM drives 201-204 with their housings are inserted. In particular, pluggable NVM drives 203-204 are shown completely introduced in the corresponding ports 205, pluggable NVM drive 202 is shown partially introduced in the corresponding port 205 and pluggable NVM drive 201 is shown outside the switch 200. The four pluggable NVM drives 201-204 are externally and frontally accessible for a user, so these drives 201-204 may be manually inserted to or removed from the ports 205.

The networking ports 205 of the switch 200 comprise heat sinks 212 for cooling the pluggable NVM drives 201-204.Each housing of the pluggable NVM drives 201-204 comprise an upper portion 207 and a lower portion 208 inside which the PCA 206, with the NVM chips 209, the memory semantic fabric media controller 210 and the connector 211, is allocated. The PCA 206 comprises circuitry (not shown) for either storage or memory. The upper portion 207 of the housing comprises a protruding portion 213 to abut against the wall of the switch 200 in which the ports 205 are located. This protruding portion 213 facilitates the grabbing of the pluggable NVM drive 201-204 when inserted to or removed from the switch 200. In some examples the pluggable NVM drives 201-204 with their housings may be hot-plugged into the networking ports 205.

The housings may be for example a die cast or sheet metal housing. The housing may further interface with latch points of the ports 205. For example the housings may be QSFP housings adapted to house the pluggable NVM drives 201-204 which may interface with standard latch points of the respective QSFP cages (ports) in the switch 200. Likewise, the connector 211 in the PCA 206 may be gold finger contacts that may interface with standard QSFP connectors in the QSFP cages. In such example, the connector 211 may have 8 differential pair pads and using a 25Gbps interface, and the four NVM chips 209 in the pluggable NVM drive 201 may be four 8GB flash memories or four 50GB DRAM. The four pluggable NVM drives 201-204 may comprise a different number of NVM chips 209 with different capacities.

The topology of the switch 200 (and thus the oversubscription ratio of the switch 200 and the network) shown in FIG 2 may be modified by plugging additional pluggable NVM drives in empty networking ports in the switch or by replacing networking devices already plugged in other existing networking ports with additional pluggable NVM drives. The topology of the switch may be further modified by replacing already plugged pluggable NVM drives with other pluggable NVM drives with different memory or storage features.

While FIG. 2 depicts four pluggable NVM drives 201-204 to be inserted in respective four networking ports 205 of a switch 200, the switch 200 may comprise any number of networking ports 205 in which the corresponding number of pluggable NVM drives 201-204 may be inserted. Besides, while FIG. 2 has been described as comprising a pluggable NVM drive in each available networking port, a switch may comprise a plurality of networking ports in which any combination of pluggable NVM drives and networking elements, such as transceivers, may be plugged.

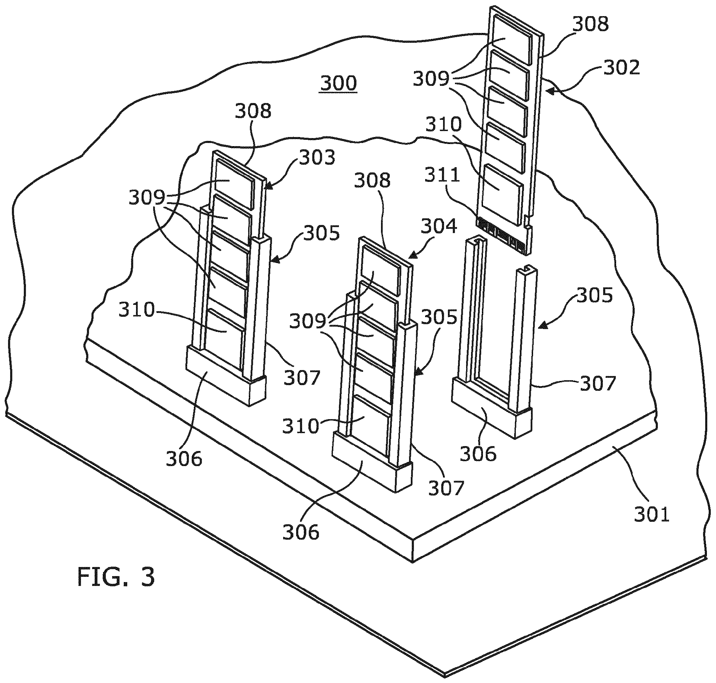

FIG. 3 is a perspective view of a set of pluggable NVM drives 302-304 housed in respective protocol connectors 305 of a board 301 of a computing network device 300, such a server. It should be understood that the set of pluggable NVM drives 302-304 housed in respective protocol connectors 305 depicted in FIG. 3 may include additional components and that some of the components described herein may be removed and/or modified without departing from a scope of the set of pluggable NVM drives 302-304 housed in respective protocol connectors 305.

Each of the pluggable NVM drives 302-304 may comprise a PCA 101 that in turn comprises a connector 311, four NVM chips 309 and a memory semantic fabric media controller 310 attached on a printed circuit board (PCB). The pluggable NVM drives 302-304 are hot-plugged in respective protocol connectors 305 attached to a board 301, for example a motherboard, of the computing network device 300, for example a 2U server. The pluggable NVM drives 302-304 may be vertically oriented or horizontally oriented depending on the orientation of the board 301 in which the drives are attached. The hot-pluggable NVM drives 302-304 may be storage or memory devices, depending on the type of NVM chips 309 attached to the PCA that can be inserted and removed from a protocol connector 305. In such example, the protocol connectors 305 are formed by a connecting body 306 directly attached to the board 301 of the server 300 and two holding arms 307 to guide and secure the PCA 308.

The examples of pluggable NVM drives 302-304 shown in FIG. 3 are in a matrix arrangement. The matrix arrangement of pluggable NVM drives 302-304 allows providing a higher density of pluggable NVM drives within a defined space in a board. Besides, it may allow a better cooling of the PCAs since cooling is more directly received by components of the pluggable NVM drive. This may allow the same PCA to be leveraged in different applications, lowering overall development costs. In addition, the topology of the server (and thus the oversubscription ratio of the server and the network) shown in FIG 3 may be modified by plugging additional pluggable NVM drives in empty protocol connectors (not shown in the figure) in the board of the server or by replacing networking devices (not shown) already plugged in other existing protocol connectors of the board with additional pluggable NVM drives. The topology of the server may be further modified by replacing already plugged pluggable NVM drives with other pluggable NVM drives with different memory or storage features.

While FIG. 3 depicts four NVM chips 309 attached to the PCA 308 of each of the pluggable NVM drives 302-304, any number of NVM chips 309 may be attached to the PCA 308 depending on desired memory or storage capabilities. In some examples the NVM chips 309 may comprise flash memories, memristors, Non-Volatile RAMs (NVRAM), Read-Only-Memories (ROM), Magneto-Resistive RAMs (MRAM), Ferroelectric RAMs (F-RAM), Resistive RAMs (ReRAM), Managed DRAMs and any combination thereof.

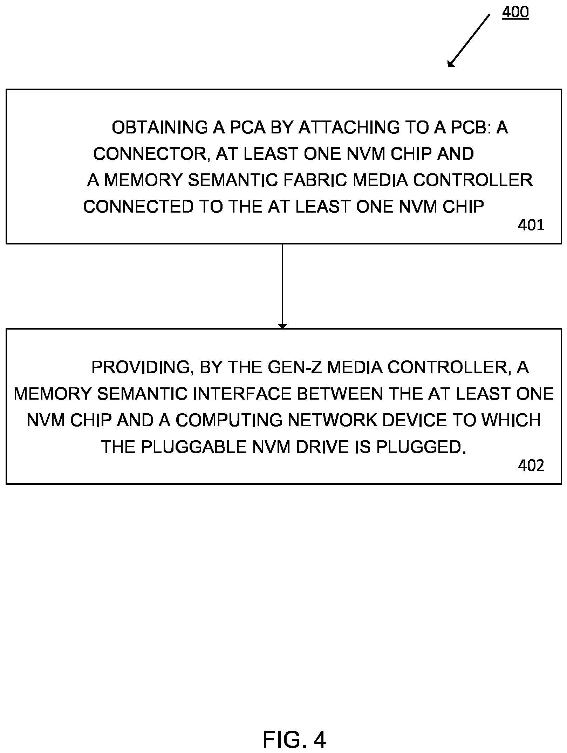

FIG. 4 is a flowchart of an example method 400 for obtaining a pluggable NVM drive. Although execution of method 400 is described below with reference to the pluggable NVM drive 100 of FIG. 1, other suitable devices and systems for the execution of method 400 may be utilized. Additionally, implementation of method 400 is not limited to such examples.

At 401 of the method 400 a PCA 101 is obtained by attaching a connector 107, at least one NVM chip 102-105 and a memory semantic fabric media controller 106, for example, a Gen-Z media controller connected to the at least one NVM chip 102-105 to a PCB. The PCA 101 further comprises the circuitry 109 necessary to electrically connect the Gen-Z media controller 106 to the NVM chips 102-105 and to the connector 107.

At 402 of method 400, the Gen-Z media controller 106 provides a memory semantic interface between the at least one NVM chip 102-105 and a computing network device, for example a switch or server, to which the pluggable NVM drive 100 is plugged.

In some other examples, the method may further comprise obtaining a housing such as a fiber optic transceiver housing to support the PCA 101. In such example, the housing may comprise an upper body and a lower body inside of which the PCA 106 may be allocated. In some examples the fiber optic transceiver housing may be a QSFP housing adapted to allocate the PCA 106.

In some examples the pluggable NVM drive 100 may be plugged in a networking port of the computing network device, for example a networking port of a switch or server. In some other examples, the pluggable NVM drive 100 may be hot-plugged in a networking port of the computing network device. In some examples, the pluggable NVM drive 100 may be plugged or hot-plugged into an internal protocol connector of the computing network device. Some examples of internal protocol connectors may be QSFP protocol connectors, XFP protocol connectors, OSFP protocol connectors, SFP protocol connectors, etc.

The method may further comprise selecting the at least one NVM chips 102-105 from a group comprising flash memories, memristors, Non-Volatile RAM, NVRAMs, Read-Only-Memory, ROMs, Magneto-Resistive RAM, MRAMs, Ferroelectric RAM, F-RAMs, Resistive RAM, ReRAMs, Managed DRAMs and any combination thereof.

An example method comprises plugging the pluggable NVM drive in a networking port of the computing network device.

An example method comprises hot-plugging the pluggable NVM drive in a networking port of the computing network device.

An example method comprises plugging the pluggable NVM drive into an internal protocol connector of the computing network device.

An example method comprises hot-plugging the pluggable NVM drive into an internal protocol connector of the computing network device.

All of the features disclosed in this specification (including any accompanying claims, abstract and drawings), and/or all of the elements of any method or process so disclosed, may be combined in any combination, except combinations where at least some of such features and/or elements are mutually exclusive.

Furthermore, relative terms used to describe the structural features of the figures illustrated herein are in no way limiting to conceivable implementations. It is, of course, not possible to describe every conceivable combination of components or methods, but one of ordinary skill in the art will recognize that many further combinations and permutations are possible. Accordingly, the invention is intended to embrace all such alterations, modifications, and variations that fall within the scope of this application, including the appended claims. Additionally, where the disclosure or claims recite "a," "an," "a first," or "another" element, or the equivalent thereof, it should be interpreted to include one or more than one such element, neither requiring nor excluding two or more such elements.

## Claims

1. A pluggable non-volatile memory (NVM) drive comprising a printed circuit assembly (PCA) comprising:
a connector;
at least one NVM chip; and
a memory semantic fabric media controller connected to the at least one NVM chip,
wherein the memory semantic fabric media controller is to provide a memory semantic interface between the at least one NVM chip and a computing network device to which the pluggable NVM drive is plugged.

2. The pluggable NVM drive of claim 1, wherein the memory semantic fabric media controller is a Gen-Z media controller.

3. The pluggable NVM drive of claim 1, wherein the pluggable NVM drive is to be plugged in a networking port of the computing network device.

4. The pluggable NVM drive of claim 3, wherein the networking port of the computing network device is an external networking port of the computing network device.

5. The pluggable NVM drive of claim 1, wherein the pluggable NMV drive is disposed within a housing that supports the PCA.

6. The pluggable NVM drive of claim 5, wherein the housing is a fiber optic transceiver housing.

7. The pluggable NVM drive of claim 6, wherein the fiber optic transceiver housing is a Networking Multi-Source Agreement (MSA) housing.

8. The pluggable NVM drive of claim 1, wherein the pluggable NVM drive is to be plugged into an internal protocol connector of the computing network device.

9. The pluggable NVM drive of claim 1, wherein the connectors are selected from a group comprising MSA connectors, Quad Small Form-factor Pluggable (QSFP) connectors and combinations thereof.

10. The pluggable NVM drive of claim 1, wherein the at least one NVM chip comprise at least one of:
flash;
memristor;
Non-Volatile RAM (NVRAM);
Read-Only-Memory (ROM);
Magneto-Resistive RAM (MRAM);
Ferroelectric RAM (F-RAM);
Resistive RAM (ReRAM); and
Managed DRAM.

11. The pluggable NVM drive of claim 1, wherein the pluggable NVM drive is hot-pluggable.

12. The pluggable NVM drive of claim 1, wherein the connector comprises a plurality of gold plated terminals.

13. The pluggable NVM drive of claim 1, wherein the connector comprises a card edge interface.

14. A method for obtaining a pluggable non-volatile memory (NVM) drive, the method comprising:
obtaining a printed circuit assembly (PCA) by attaching the following components to a printed circuit board (PCB):
a connector;
at least one NVM chip; and
a Gen-Z media controller connected to the at least one NVM chip; and
providing, by the Gen-Z media controller, a memory semantic interface between the at least one NVM chip and a computing network device to which the pluggable NVM drive is plugged.

15. The method of claim 14, comprising:
obtaining a fiber optic transceiver housing to support the PCA, the fiber optic transceiver housing including an upper body and a lower body; and
allocating the PCA between the upper body and a lower body of the fiber optic transceiver housing.
